# EUROPÄISCHE PATENTSCHRIFT

(11) **EP 3 464 951 B1**
(45) Veröffentlichungstag und Bekanntmachung des Hinweises auf die Patenterteilung: **06.04.2022**
(21) Anmeldenummer: 17721679.3
(22) Anmeldetag: 05.05.2017
(51) Int. Cl.: F16H 57/04, F16H 57/029, F16H 57/032, F16H 1/06, F16H 57/027, F16H 57/02

(54) **STIRNRADGETRIEBE**
CYLINDRICAL-GEAR TRANSMISSION
TRANSMISSION À PIGNONS DROITS

(30) Priorität: 01.06.2016 DE 102016209549
(43) Veröffentlichungstag der Anmeldung: 10.04.2019
(73) Patentinhaber: Voith Patent GmbH, 89522 Heidenheim (DE)
(72) Erfinder: KÄMMERER, Herr Steffen, 87509 Immenstadt (DE); RAUCH, Matthias, 87437 Kempten (DE); SCHNEIDER, Marco, 87534 Oberstaufen (DE)
(74) Vertreter: Voith Patent GmbH - Patentabteilung
(86) Internationale Anmeldenummer: PCT/EP2017/060775
(87) Internationale Veröffentlichungsnummer: WO 2017/207215

(56) Entgegenhaltungen:
- EP-A1- 2 535 618
- EP-A1- 2 535 618
- EP-A2- 1 918 613
- EP-A2- 1 918 613
- WO-A1-2012/028231
- WO-A1-2012/028231
- DE-A1-102011 012 660
- DE-A1-102011 012 660
- DE-U1- 29 517 964
- DE-U1- 29 517 964
- JP-Y1- S4 834 435
- JP-Y1- S4 834 435
- US-A- 2 214 485
- US-A- 2 214 485
- US-A1- 2015 362 024
- US-A1- 2015 362 024

## Beschreibung

Die vorliegende Erfindung betrifft ein Stirnradgetriebe mit wenigstens zwei verzahnten Stirnrädern gemäß dem Oberbegriff von Anspruch 1.

Stirnradgetriebe der gattungsgemäßen Art sind beispielsweise aus der WO 2012/028231 A1 bekannt. Solche Stirnradgetriebe sind beispielsweise als hochtourige Getriebe, wie Turbogetriebe, ausgeführt.

Besonders bei solchen hochtourigen Getrieben wie Turbogetrieben entstehen aufgrund der Verwirbelung des Luft-Öl-Gemischs im Innenraum des Getriebegehäuses Verluste, die unerwünscht sind. Zur Verlustreduzierung sind verschiedene Maßnahmen bekannt. Eine Maßnahme sieht vor, den Innenraum des Getriebegehäuses mittels einer Vakuumpumpe zu besaugen, sodass der Druck im Innenraum niedriger als jener der Umgebung außerhalb des Getriebegehäuses ist.

Eine andere Maßnahme, die eine solche Besaugung des Getriebegehäuses vermeiden soll, ist in der eingangs genannten WO 2012/028231 A1 dargestellt, nämlich das Vorsehen einer eng anliegenden Hüllwand um die Stirnräder, welche die Stirnräder in Umfangsrichtung bis auf einen Einlassspalt und gegebenenfalls Auslassspalt, der außerhalb des äußeren Umfangs der Stirnräder positioniert ist, umschließt. Auch diese Kapselung der Stirnräder mit der Hüllwand wurde vorgesehen, um einen Unterdruck im Bereich des äußeren Durchmessers der Stirnräder beziehungsweise im Bereich von deren Verzahnungen zu erzeugen, der die Verluste reduziert.

Beide bekannten Maßnahmen basieren somit auf der Annahme, dass ein möglichst geringer Druck, das heißt ein möglichst starkes Vakuum im Bereich der umlaufenden Verzahnungen der Stirnräder erzeugt werden muss, um die Verlustleistungen zu reduzieren. Daher wurden entsprechend aufwändige Maßnahmen zur weitgehenden Abdichtung beziehungsweise vergleichsweise leistungsstarke und damit teure und energieintensive Vakuumpumpen vorgesehen, um das Vakuum möglichst zu optimieren. Diese Maßnahmen sind mit unerwünschten Kosten verbunden.

DE 198 60 353 C1 offenbart ein Stirnradgetriebe, bei welchem die Stirnräder von einem zusätzlichen Innengehäuse, das innerhalb eines Hauptgehäuses befestigt ist, umschlossen werden. Im Innenraum des Innengehäuses wird mittels einer Pumpe ein Teilvakuum erzeugt. Der Raum zwischen dem Innengehäuse und dem Hauptgehäuse steht unter Atmosphärendruck. Die Stirnräder ragen nicht nach außen aus dem Innengehäuse heraus, sondern werden mit Abstand von diesem umschlossen, sodass sich auch keine ineinander übergehende Ringspalte ergeben.

DE 10 2006 022 964 A1 beschreibt einen Fluidausgleichsbehälter und ein damit ausgestattetes Getriebe. Der Fluidausgleichsbehälter umschließt die Stirnräder seitlich über einen Teil ihres Umfangs.

DE 10 2007 041 318 A1 beschreibt ein Schaltgetriebe mit einer Zahnradpumpe, wobei die Zahnradpumpe eine Außenzahnradpumpe ist und zwei miteinander kämmende Zahnräder aufweist, von denen eines einem der Radsätze im Getriebe angehört. Zur Ausbildung eines Pumpspalts ist unterhalb der Zahnräder ein zusätzliches Gehäuse vorgesehen, das sich teilweise über den Umfang der Zahnräder erstreckt.

GB 292 540 A beschreibt mit hoher Drehzahl umlaufende Zahnräder in einem Gehäuse, denen eine besondere Führung zugeordnet ist, um die Schmierung der Zahnräder zu verbessern. Die Führung umschließt die Zahnräder teilweise und ist auf der Unterseite zumindest derart geschlossen, dass die Zahnräder nicht aus der Führung herausragen.

GB 1 426 352 A beschreibt eine Schmiereinrichtung für Zahnräder, bei welchem ebenfalls ein teilweise geöffnetes Innengehäuse vorgesehen ist, das die Zahnräder auf deren Unterseite und auf einer seitlichen Seite eng umschließt.

GB 458 379 A offenbart eine Luftpumpe, die in ein Getriebe integriert ist. Die Luftpumpe weist Führungsbögen auf, die die Zahnräder auf deren Stirnseiten einschließen.

US 2014/0054114 A1 offenbart eine Schmierölversorgung für ein Getriebe, bei welcher eine Abdeckung das Ritzel zweier Stirnräder vollständig umschließt und das andere Zahnrad der beiden Stirnräder über dem halben Umfang umschließt.

US 5 950 501 A zeigt ein Stirnradgetriebe, dessen Innengehäuse die Stirnräder mit einem gewissen Abstand umschließt und mittels einer Pumpe evakuiert oder mit einem Gas befüllt wird. Es sind keine ineinander übergehende Ringspalte vorgesehen und die Stirnräder ragen nicht aus dem Innengehäuse heraus.

US 2 645 305 A beschreibt eine Schmiereinrichtung für Stirnräder eines Getriebes mit einer seitlichen Abschirmung der Stinräder, die nur über einen kleinen Teil des äußeren Umfangs der Stirnräder ragt.

EP 2 535 618 A1 offenbart von Gehäusen umschlossene Stirnräder, die jedoch nicht aus den Gehäusen herausragen.

WO 2012/028231 A1 offenbart ein gattungsgemäßes Zahnradgetriebe mit einer mehrteiligen Hüllwand, die wenigstens eines von zwei miteinander zusammenarbeitenden Zahnrädern umschließt und den umschlossenen Innenraum partiell oder vollkommen gegen die Umgebung absperrt und durch seitlich geschlossene Wände charakterisiert ist. Die Zahnräder ragen nicht aus der Hüllwand heraus.

JP 2011-163365 A offenbart ein Zahnradgetriebe mit einem Ölkanal, der sich teilweise der Form der Zahnräder anschmiegt.

Im Stand der Technik werden somit Stirnradgetriebe beschrieben, deren Stirnräder von einer Hüllwand eng umschlossen werden, als auch Zahnradpumpen mit entsprechend eng umschlossenen Zahnrädern. Bei Zahnradpumpen ist der Zweck der Umhüllung jedoch ein vollkommen anderer als bei Stirnradgetrieben. So muss im Zahneingriffsbereich der Zahnräder ein entsprechender Druckraum geschaffen werden, um das Pumpmedium auf den gewünschten Pumpendruck zu fördern. Um die gewünschte Förderwirkung zu erreichen, ist die enge und dichte Begrenzung des Druckraumes erforderlich. Bei solchen Zahnradpumpen, die wesentlich langsamer als Stirnradgetriebe der gattungsgemäßen Art umlaufen, spielt eine Benetzung der Zahnräder mit dem Pumpmedium bezüglich des Wirkungsgrades keine Rolle. Vielmehr tauchen die Zahnräder in das Pumpmedium, in der Regel einen Ölsumpf ein, um dieses Medium wie gewünscht fördern zu können. Bei gattungsgemäßen Stirnradgetrieben hingegen spielt, wie dargelegt, die Benetzung der Stirnräder mit flüssigem Medium, insbesondere Öl, eine bedeutende Rolle. Auf der einen Seite ist eine Schmierung des Zahneingriffsbereichs notwendig, um einen vorzeitigen Verschleiß zu vermeiden. Auf der anderen Seite nimmt mit zunehmendem Einbringen von Flüssigkeit, insbesondere Öl, die Verlustleistung aufgrund der hohen Drehzahl der Stirnradgetriebe zu. Die Anforderungen an Stirnradgetriebe der gattungsgemäßen Art unterscheiden sich daher grundsätzlich von den Anforderungen an Zahnradpumpen.

Der vorliegenden Erfindung liegt die Aufgabe zugrunde, ein Stirnradgetriebe mit wenigstens zwei verzahnten Stirnrädern der eingangs dargestellten Art anzugeben, das einerseits hinsichtlich der Verlustleistungen optimiert ist, zuverlässig und verschleißarm arbeitet und andererseits kostengünstig herstellbar ist, wobei insbesondere bei der Montage eine einfache Einstellbarkeit und Positionierung der Stirnräder gegeben sein soll.

Die erfindungsgemäße Aufgabe wird durch ein Stirnradgetriebe mit den Merkmalen von Anspruch 1 gelöst. In den abhängigen Ansprüchen sind vorteilhafte und besonders zweckmäßige Ausgestaltungen der Erfindung angegeben.

Ein Stirnradgetriebe weist wenigstens zwei verzahnte Stirnräder auf, deren Verzahnungen in einem kämmenden Eingriff miteinander stehen, wobei die beiden Stirnräder jeweils über einer Drehachse drehbar sind. Das Stirnradgetriebe weist eine Hüllwand auf, welche die beiden Stirnräder in Umfangsrichtung und in Richtung der Drehachsen umschließt, wobei die Hüllwand eine Innenkontur aufweist, welche den Außendurchmessern der Stirnräder derart angepasst ist, dass sich zwischen der Hüllwand und den Stirnrädern zwei ineinander übergehende Ringspalte ergeben, wobei je ein Ringspalt zumindest im Wesentlichen konzentrisch zu je einer Drehachse angeordnet ist.

Die Hüllwand wird durch ein zweiteiliges, entlang einer Teilfuge geschlossenes Gehäuse mit einem Oberteil und einem Unterteil gebildet, wobei sich die Teilfuge teilweise oder vollständig im Wesentlichen innerhalb einer Ebene erstreckt, in welcher die beiden Drehachsen der Stirnräder verlaufen oder in welcher eine der beiden Drehachsen verläuft.

Somit weist das Gehäuse zwei Teile auf, nämlich ein erstes Teil, vorliegend Oberteil genannt, und ein zweites Teil, vorliegend Unterteil genannt, die an der Teilfuge zusammengefügt sind, insbesondere lösbar aneinander zusammengefügt sind, beispielsweise verschraubt sind.

Die Erstreckung der Teilfuge im Wesentlichen in einer Ebene, in welcher die beiden Drehachsen der Stirnräder verlaufen, bedeutet dabei, dass die Teilfuge mit einem Abschnitt oder sogar vollständig in der Ebene liegt, innerhalb von welcher die beiden Drehachsen verlaufen, oder mit dem entsprechenden Abschnitt oder vollständig dieser Ebene zumindest nahe ist, das heißt einen vorgegebenen Abstand nicht überschreitet. Beispielsweise ist der Abstand kleiner als ein Außendurchmesser einer Antriebswelle und/oder einer Abtriebswelle der beiden Stirnräder. Gemäß einer anderen vorteilhaften Ausführungsform ist der Abstand nicht größer als der Radius der Antriebswelle und/oder der Abtriebswelle. Entsprechendes gilt auch für die Ausführungsform mit der Teilfuge in der Ebene nur einer Drehachse der Stirnräder.

Das Oberteil ist vorteilhaft einteilig ausgeführt.

Besonders vorteilhaft umschließt das Oberteil wenigstens eine Hälfte des gemeinsamen äußeren Umfangs der beiden Stirnräder einteilig. Der gemeinsame äußere Umfang der beiden Stirnräder ist die Summe der Einzelumfänge der beiden Stirnräder abzüglich der Abschnitte, die sich einander unmittelbar gegenüberstehen. In anderen Worten wird die Hälfte des gemeinsamen äußeren Umfangs in einem achssenkrechten Querschnitt durch die beiden Drehachsen durch den Anteil gebildet, der auf einer Seite durch eine Ebene begrenzt wird, in welcher die beiden Drehachsen verlaufen.

Erfindungsgemäß ist zumindest das Oberteil als Schweißkonstruktion ausgeführt. Alternativ können das Oberteil und das Unterteil als Schweißkonstruktion ausgeführt sein.

Besonders vorteilhaft ist zumindest das Oberteil oder sind das Oberteil und das Unterteil aus geschweißtem Stahlblech hergestellt.

Gemäß einer Ausgestaltung ist die Hüllwand in Vertikalrichtung und/oder in Horizontalrichtung elastisch gelagert.

Beispielsweise weist das Stirnradgetriebe ein Getriebegehäuse auf, das einen insbesondere mit einem Luft-Schmiermittel-Gemisch befüllten Innenraum umfasst, und die Stirnräder sind zusammen mit der Hüllwand in dem Innenraum positioniert.

Die Hüllwand kann vorteilhaft im Getriebegehäuse mittels einzelner lokal begrenzter Lagerstellen gelagert sein. Diese Lagerstellen werden beispielsweise durch Vorsprünge oder Pratzen außen an der Hüllwand gebildet. Gemäß einer besonders vorteilhaften Ausgestaltung ist wenigstens eine obere Lagerstelle im Bereich eines oberen Endes der Hüllwand vorgesehen und es sind ferner wenigstens zwei untere Lagerstellen im Bereich der Teilfuge oder unterhalb der Teilfuge der Hüllwand vorgesehen. Gemäß einer weiteren Ausführungsform sind weitere, insbesondere vier Lagerstellen im Bereich der Teilfuge der Hüllwand vorgesehen.

Die obere Lagerstelle kann zur Lagerung, insbesondere elastischen Lagerung, in Vertikalrichtung dienen. Die Lagerstellen im Bereich der Teilfuge können insbesondere zur Lagerung, vorteilhaft zur elastischen Lagerung in Vertikalrichtung dienen. Die unteren Lagerstellen können zur Lagerung, insbesondere elastischen Lagerung in Horizontalrichtung und/oder Vertikalrichtung dienen.

Gemäß einer Ausführungsform ist jede Lagerstelle der Hüllwand elastisch im Getriebegehäuse abgestützt. Gemäß einer alternativen Ausführungsform sind eine oder mehrere Lagerstellen als Fixpunkt ohne elastische Abstützung im Getriebegehäuse ausgeführt, wohingegen andere

Lagerstellen zum Ausgleich von beispielsweise Wärmedehnungen elastisch abgestützt sind. Gemäß einer weiteren Ausführungsform ist jede Lagerstelle innerhalb einer gemeinsamen Ebene oder zumindest im Wesentlichen innerhalb einer gemeinsamen Ebene in wenigstens einer ersten Richtung oder innerhalb einer ersten Ebene nicht elastisch fixiert und innerhalb einer zweiten Richtung, insbesondere zweiten Ebene, die beispielsweise senkrecht auf der ersten Richtung oder ersten Ebene steht, elastisch im Getriebegehäuse gelagert. Gemäß einer vorteilhaften Weiterbildung ist dann wenigstens eine weitere Lagerstelle außerhalb dieser gemeinsamen Ebene in der zweiten Richtung oder zweiten Ebene unelastisch im Getriebegehäuse fixiert und parallel zu der ersten Richtung beziehungsweise planparallel zu der ersten Ebene elastisch gelagert.

Beispielsweise ist die obere Lagerstelle in einer Vertikalrichtung elastisch und in einer Horizontalrichtung unelastisch im Getriebegehäuse abgestützt, und die unteren Lagerstellen sind in der Horizontalrichtung elastisch und insbesondere in der Vertikalrichtung unelastisch im Getriebegehäuse abgestützt.

Die elastische Abstützung der Lagerstellen ermöglicht die Kompensation von Wärmedehnung der Hüllwand beziehungsweise von unterschiedlichen Wärmedehnungen zwischen der Hüllwand und dem Getriebegehäuse und ermöglicht, dass der Spalt zwischen den Stirnrädern und der Hüllwand minimal ausgeführt wird, ohne dass die Gefahr eines Anlaufens besteht.

Wenn jedes Stirnrad wenigstens eine Antriebswelle oder Abtriebswelle aufweist, so sind diese Wellen vorteilhaft im Getriebegehäuse gelagert, insbesondere frei von einer Lagerung in der Hüllwand.

Das Oberteil kann vorteilhaft eine stets offene oder verschließbare Wartungsöffnung aufweisen, welche einen direkten Zugang auf den Zahneingriffsbereich der beiden Stirnräder ermöglicht. Der Zugang zur Wartungsöffnung erfolgt beispielsweise über einen sogenannten Schaulochdeckel des Getriebegehäuses.

Das Getriebegehäuse ist vorteilhaft zweiteilig oder mehrteilig ausgeführt und weist insbesondere eine Teilfuge in derselben Ebene wie die Teilfuge der Hüllwand auf. Besonders vorteilhaft weist das Getriebegehäuse eine untere Gehäusehälfte und eine obere Gehäusehälfte auf, die jeweils einteilig oder mehrteilig ausgeführt sein können.

Die beiden Stirnräder sind vorteilhaft in Horizontalrichtung des Stirnradgetriebes mit ihren Drehachsen nebeneinander positioniert, wobei die Drehachsen insbesondere innerhalb einer gemeinsamen horizontalen Ebene verlaufen. Die Ebene ist insbesondere parallel zur Oberfläche eines Ölsumpfes unten im Stirnradgetriebe.

Die beiden Stirnräder sind vorteilhaft mit Abstand zu einem Ölsumpf unten im Stirnradgetriebe angeordnet.

Das Getriebegehäuse ist insbesondere aus Stahl oder einer Stahllegierung hergestellt.

Gemäß einer vorteilhaften Ausführungsform der Erfindung ist an der Hüllwand wenigstens ein Dichtungselement angeschlossen, welches wenigstens einen Ringspalt zumindest teilweise abdichtet, und das wenigstens eine Dichtungselement ist aus einem weicheren Werkstoff als das Oberteil oder als das Oberteil und das Unterteil der Hüllwand hergestellt.

Das Unterteil weist eine einen Abschnitt des Umfangs wenigstens eines oder beider der beiden Stirnräder freigebende Öffnung auf, welche ausgehend von den Drehachsen der Stirnräder nach unten gerichtet ist. Beispielsweise kann eine solche Öffnung in Umfangsrichtung der Stirnräder beidseitig mittels jeweils eines entsprechenden Dichtungselementes gegenüber dem wenigstens einen Stirnrad oder gegenüber beiden Stirnrädern zumindest teilweise abgedichtet sein.

Die Dichtungselemente sind beispielsweise aus Aluminium hergestellt.

Die Dichtungselemente sind in Radialrichtung einstellbar ausgebildet. Sie können also, beispielsweise durch die Aufnahme in einem Langloch und die Fixierung über eine entsprechende Schraube so in Richtung des Zahnprofils bewegt werden, dass sich der verbleibende Ringspalt sehr exakt einstellen lässt. So kann beispielsweise auf fertigungsbedingte Toleranzen reagiert werden. Trotz einer vergleichsweise groben Tolerierung kann die gewünschte Größe des Ringspalts exakt eingestellt werden.

An der Hüllwand kann wenigstens eine Temperaturmessstelle vorgesehen sein. Gemäß einer Ausführungsform der Erfindung sind mehrere Temperaturmessstellen an der Hüllwand vorgesehen.

Günstig ist, wenn die Hüllwand eine Schmierölversorgung aufweist, mittels welcher ein Schmierölstrom in die Verzahnungen der Stirnräder einleitbar oder einspritzbar ist. Hierzu kann beispielsweise eine Öffnung in der Hüllwand, insbesondere in einer Seitenwand der Hüllwand vorgesehen sein. Der Schmierölstrom kann über die zuvor dargestellte nach unten gerichtete Öffnung und/oder über eine weitere Öffnung, insbesondere in einer Seitenwand der Hüllwand abgeleitet werden.

Ferner kann es vorgesehen sein, dass zwischen dem äußeren Umfang der Hüllwand und zumindest der oberen Gehäusehälfte des Getriebegehäuses mehrere sich in Radialrichtung auf das Getriebehäuse hin erstreckende Blechelemente vorgesehen sind, welche wenigstens drei axial benachbarte Kanalabschnitte ausbilden. Hierdurch kann sichergestellt werden, dass in dem oder den zentralen Kanalabschnitten in axialer Richtung gesehen, das Kühlmedium strömen kann. Benachbart bleiben Bereiche, welche zum Beispiel luftdurchströmt sind, um Schmierölnebel aufzunehmen und abzuleiten.

Gemäß einer weiteren Ausgestaltung kann es dafür insbesondere vorgesehen sein, dass radiale Öffnungen in der Hüllwand vorgesehen sind, und zwar im Bereich der axial außenliegenden Kanalabschnitte, sodass hier eventueller Schmierölnebel einfach und effizient abgeführt werden kann.

Günstig ist, wenn die Hüllwand flüssigkeitsgekühlt, insbesondere ölgekühlt ist. Hierzu kann vorteilhaft ein Kühlmittelstrom über die Hüllwand und/oder durch die Hüllwand geleitet werden. Dabei ist günstig, wenn der Kühlmittelstrom getrennt von dem Schmierölstrom einstellbar ist, insbesondere in seinem Volumenstrom getrennt vom Schmierölstrom regelbar oder steuerbar ist. Beispielsweise ist für den Schmierölstrom und dem Kühlmittelstrom jeweils eine eigene Pumpe vorgesehen. Selbstverständlich können andere Maßnahmen zu unabhängigen Einstellungen beider Ströme vorgesehen sein.

Ein axialer Abstand der Stirnräder zu den Seitenwänden der Hüllwand kann erheblicher größer sein als der radiale Abstand zwischen den Verzahnungen und der Hüllwand. Beispielsweise ist der axiale Abstand größer als 10 mm und der radiale Abstand beträgt maximal 2 mm.

Es können radiale und/oder axiale Öffnungen in der Hüllwand beziehungsweise in ihren Seitenwänden vorgesehen sein, um einen Ölablauf des Schmierölstromes und insbesondere einen Austritt von Luft und Schmierölnebel zu ermöglichen. Insbesondere die erfindungsgemäßen Öffnungen in den Seitenwänden, also die axialen Öffnungen im Bereich der Ringspalte, erlauben dabei ein Abströmen von unerwünschten Schmierölnebeln und ein Entlüften des Innenraums, in welchem sich die Stirnräder bewegen. Darüber hinaus haben derartige axiale Öffnungen in den Seitenwänden der Hüllwand den Vorteil, dass diese bei der Montage eine Sicht auf die Verzahnung der Stirnräder ermöglichen, sodass eine sehr einfache Einstellbarkeit durch den Sichtkontakt auf die zueinander zu positionierenden Elemente gegeben ist.

Die Flüssigkeitskühlung der Hüllwand kann im beziehungsweise am Oberteil und/oder im beziehungsweise am Unterteil vorgesehen sein.

Bei der Montage des Stirnradgetriebes kann das Oberteil auf das Unterteil aufgeschraubt werden, insbesondere bevor ein Oberteil des Getriebegehäuses auf das Unterteil des Getriebegehäuses montiert wird.

Das erfindungsgemäße Stirnradgetriebe ist vorteilhaft als Drehzahl-Drehmoment-Wandlungseinrichtung ausgeführt. Insbesondere sind die Stirnräder frei von einem Eintauchen in einen Flüssigkeitsvorrat, insbesondere Ölsumpf positioniert.

Die Erfindung soll nachfolgend anhand eines Ausführungsbeispiels und den Figuren exemplarisch beschrieben werden.

Es zeigen:
- Figur 1: eine schematische Darstellung eines Ausführungsbeispiels der Erfindung;
- Figur 2: einen schematischen Schnitt durch die Drehachse eines Stirnrades eines Ausführungsbeispiels eines erfindungsgemäßen Stirnradgetriebes;
- Figur 3: eine schematische Schnittdarstellung, analog zur Ausführung in Figur 2, wobei hier eine alternative Ausführungsvariante und von dieser lediglich die obere Hälfte gezeigt ist; und
- Figur 4: einen Schnitt in Radialrichtung durch die Drehachsen eines möglichen erfindungsgemäßen Stirnradgetriebes.

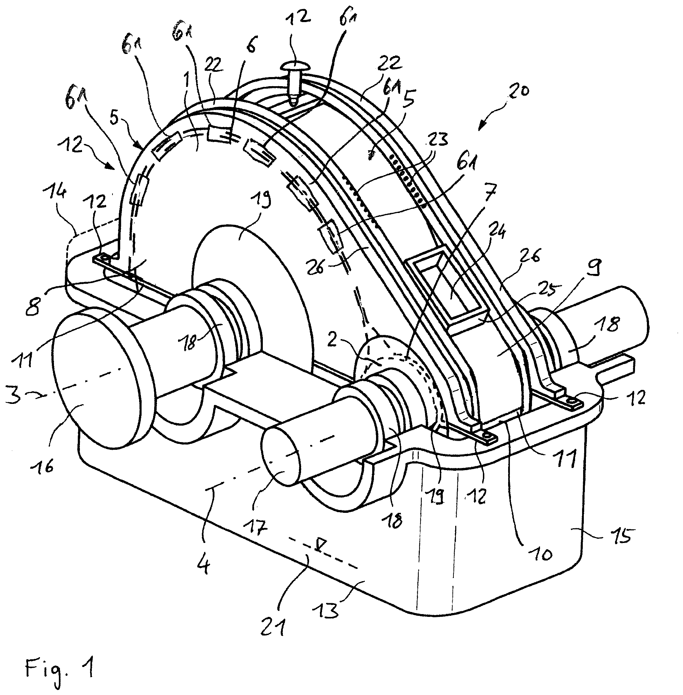

In der Figur 1 ist eine mögliche Gestaltung eines erfindungsgemäßen Stirnradgetriebes gezeigt. Die beiden Stirnräder sind mit 1 und 2 bezeichnet und stehen mit ihren Verzahnungen in einem kämmenden Eingriff miteinander, sodass durch Antrieb eines der beiden Stirnräder 1, 2 über die entsprechende Drehachse 3 oder 4 das jeweils andere Stirnrad 1, 2 über entsprechend seiner Drehachse 3 oder 4 mittels des verzahnten Eingriffes angetrieben wird.

Die beiden Stirnräder 1, 2 werden von einer Hüllwand 5 entlang des größten Teiles ihres äußeren Umfanges eng umschlossen, wobei die Hüllwand 5 derart mit ihrer Innenkontur an den Aussendurchmesser der beiden Stirnräder 1, 2 angepasst ist, dass sich zwischen der Hüllwand 5 und den Stirnrädern 1, 2 zwei ineinander übergehende Ringspalten 6, 7 ergeben. In der Figur 1 sind diese Ringspalte schematisch in gestrichelten Linien gezeigt, da sie von der Seitenwand 8 der Hüllwand 5 überdeckt werden. Im Bereich der in Figur 1 erkennbaren Seitenwand 8 der Hüllwand 5 sind dabei radiale Öffnungen 61 zu erkennen. Durch diese radialen Öffnungen 61 ist insbesondere eine Abfuhr von Schmierölnebeln aus dem Bereich der Ringspalte 6, 7 möglich. Darüber hinaus ermöglichen diese axialen Öffnungen 61 einen Sichtkontakt auf die Verzahnung der Stirnräder und erlauben so eine einfache Einstellbarkeit.

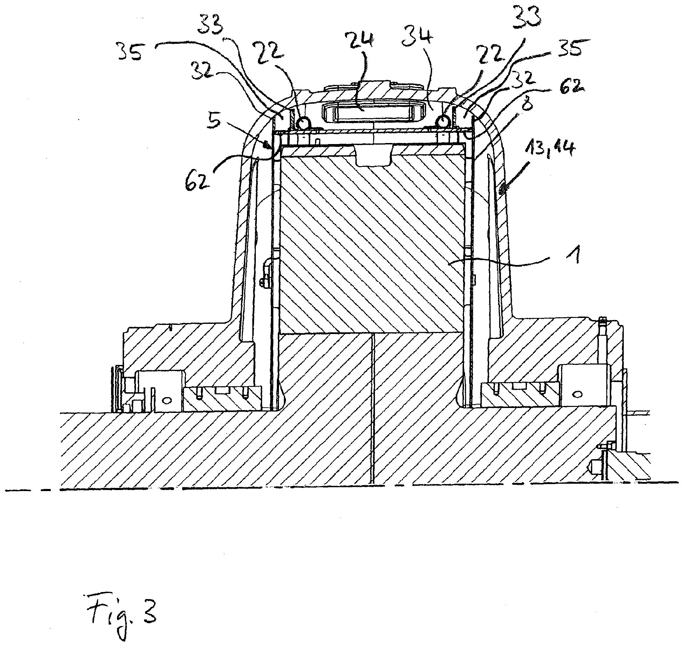

Die Hüllwand 5 weist ein Oberteil 9 und ein Unterteil 10 auf, die hier jeweils als Schweißkonstruktion aus Stahlblech hergestellt sind und ein entlang der Teilfuge 11 geschlossenes zweiteiliges Gehäuse bilden. Die Teilfuge 11 ist dabei besser aus der Figur 3 erkennbar, auf welche später noch zurückgegriffen wird.

Die Hüllwand 5 ist über eine Anzahl von Lagerstellen 12 in einem Getriebegehäuse 13 gelagert, von dem in der Figur 1 die obere Gehäusehälfte 14 nur schematisch angedeutet ist und die untere Gehäusehälfte 15 zumindest im Wesentlichen vollständig dargestellt ist.

Die beiden Stirnräder 1 und 2 weisen jeweils eine Welle 16, 17 auf, von denen eine das entsprechende Stirnrad 1, 2 antreibt und die andere durch den verzahnten Eingriff der beiden Stirnräder 1, 2 als Abtriebswelle entsprechend angetrieben wird. Die beiden Wellen 16, 17 sind durch Lager 18 im Getriebegehäuse 13 gelagert.

Bei der Ausgestaltung gemäß der Figur 1 sind in Axialrichtung der Drehachsen 3, 4 seitlich neben den Lagern 18 Abschirmplatten 19 vorgesehen, die dazu dienen, einen Übertritt des Lageröls der Lager 18 auf die rotierenden Teile der Stirnräder 1, 2 zu vermeiden. Solche Abschirmplatten 19 sind insbesondere dann sinnvoll, wenn die Hüllwand 5 seitlich nicht vollständig oder nahezu vollständig geschlossen ist, also die entsprechenden Seitenwände 8 einen größeren Abstand zu den Wellen 16, 17 aufweisen. Gegebenenfalls können die Abschirmplatten 19 jedoch eingespart werden, insbesondere wenn die Seitenwände 8 die Hüllwand 5 weitgehend verschließen.

Die Hüllwand 5 weist eine Kühleinrichtung 20 auf, mittels welcher sie getrennt von einer Schmierölversorgung der Stirnräder 1, 2 gekühlt werden kann. Als Kühlmittel kann jedoch Öl verwendet werden, insbesondere aus demselben Ölvorrat oder Ölsumpf, aus dem auch die Schmierölversorgung erfolgt. Ein solcher Ölsumpf kann, wie schematisch in der Figur 1 dargestellt ist, unten im Getriebegehäuse 13 vorgesehen sein und insbesondere mit Abstand zu den Stirnrädern 1, 2 positioniert sein. In der Figur 1 ist der Ölsumpf mit 21 bezeichnet und nur schematisch angedeutet.

Die Kühleinrichtung 20 umfasst zwei außen entlang der Hüllwand 5 gefühlte Kühlrohre 22, welche Auslassöffnungen 23 aufweisen, über die Kühlmittel außen auf die Hüllwand 5 sprühbar ist. Das Kühlmittel kann dann entlang der Hüllwand 5 nach unten in den Ölsumpf 21 ablaufen. Insbesondere werden das Oberteil 9 und das Unterteil 10 auf diese Art gekühlt. Zusätzlich oder alternativ ist es auch möglich, innerhalb der Hüllwand 5 entsprechende Kühlkanäle vorzusehen.

Bei dem Ausführungsbeispiel in der Figur 1 ist in der Hüllwand 5 eine Wartungsöffnung 24 vorgesehen, die eine Seitenwand 25 aufweist, um zu verhindern, dass Kühlmittel durch die Wartungsöffnung 24 auf die Stirnräder 1, 2 strömt. Die Wartungsöffnung ist jedoch nicht zwingend.

Bei dem Ausführungsbeispiel gemäß der Figur 1 weist die Hüllwand 5 zwei Stege 26 auf, um die Stabilität der Hüllwand 5 zu verbessern. Je nach Wandstärke der Hüllwand 5 kann auf die Ausgestaltung von Stegen jedoch verzichtet werden.

Auch die Teilfuge des Getriebegehäuses 13 verläuft zumindest im Wesentlichen in derselben Ebene wie die Teilfuge 11 zwischen dem Oberteil 9 und dem Unterteil 10 der Hüllwand 5. Auch dies könnte jedoch auch anders gewählt, ist jedoch günstig bezüglich einer Montage der Wellen 16, 17 beziehungsweise der Lager 18.

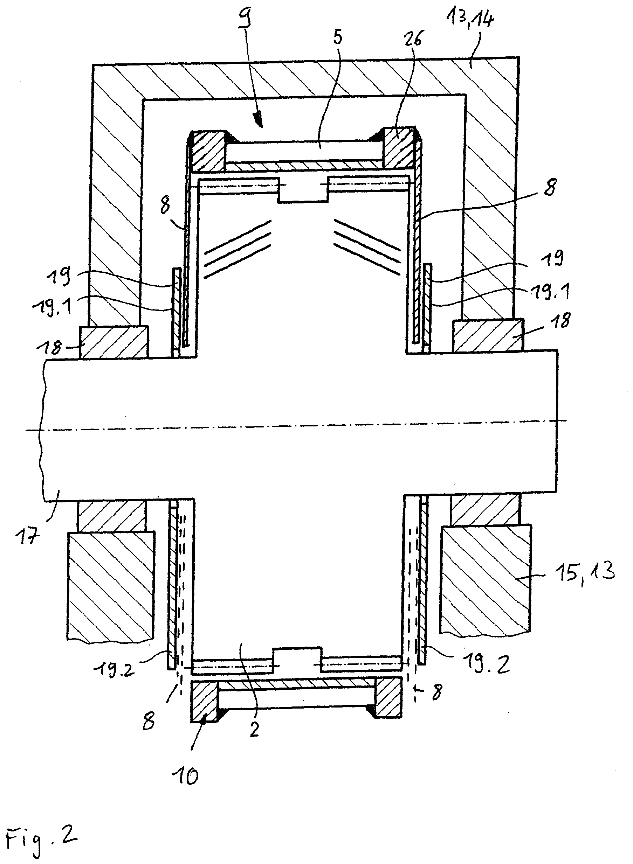

In den Figuren 2, 3 und 4 sind die entsprechenden Bauteile mit denselben Bezugszeichen wie in der Figur 1 bezeichnet.

Aus der Figur 2 erkennt man, dass die Stirnräder, hier dargestellt anhand des Stirnrades 2 beispielsweise als doppelt verzahnte Stirnräder ausgeführt sein können, insbesondere mit einer Doppelschrägverzahnung. Ferner erkennt man, dass die Hüllwand 5 als Schweißkonstruktion ausgeführt ist, hier wiederum mit Stegen 26, auf die jedoch gegebenenfalls verzichtet werden kann. Die in der Figur 2 dargestellten Abschirmplatten 19 sind zweiteilig ausgeführt, mit einem Abschirmplattenoberteil 19.1 und einem Abschirmplattenunterteil 19.2. Hierauf kann jedoch gegebenenfalls verzichtet werden, insbesondere, wenn, wie nur schematisch angedeutet ist, auch das Unterteil 10 der Hüllwand 5 Seitenwände 8 aufweist. Die Seitenwände 8 sind integral mit der Hüllwand 5 ausgeführt.

Die Abstände des Stirnrades 2 zu der Hüllwand 5 sind in der Figur 2 nicht maßstäblich dargestellt. Vielmehr wird in der Regel der Abstand in Radialrichtung wesentlich geringer sein als der Abstand in Axialrichtung. Insbesondere beträgt der Abstand zwischen der Hüllwand 5 und dem entsprechenden Stirnrad, hier dem Stirnrad 2, ein vielfaches des radialen Abstandes.

In der Figur 3 ist zusätzlich eine Schmierölversorgung 27 schematisch dargestellt, die unabhängig von der Kühleinrichtung 20 Öl auf die Stirnräder 1, 2 führen kann, insbesondere im Bereich der Verzahnung. Ferner sind mögliche Temperaturmessstellen 28 gezeigt, die an der Hüllwand 5 vorgesehen sein können.

Die Teilfuge 29 des Getriebegehäuses 13 ist hier etwas gegenüber der Teilfuge 11 der Hüllwand 5 versetzt, jedoch parallel hierzu.

In der Darstellung der Figur 3 ist eine alternative Ausführungsvariante zu erkennen. Die Seitenwände 8 der Hüllwand 5 sind dabei mit dem umfangsseitigen Teil der Hüllwand 15 zu einem verschweißten Bauteil zusammengefügt. Durch überstehende Seitenwände 8 oder zusätzliche Blechelemente, welche in der Darstellung der Figur 3 mit 32 bezeichnet sind, erfolgt eine quasi Abdichtung des in Umfangsrichtung radial außerhalb des Stirnrades 1 und der Hüllwand 5 liegenden Bereichs von dem neben den Seitenwänden 8 liegenden Bereich im Inneren des Getriebegehäuses 13. Quasi bedeutet in diesem Zusammenhang, dass hier keine tatsächliche Abdichtung erfolgt, da ein gewisser Spalt verbleibt, alleine schon, um aus Montagegründen die Toleranzen nicht unnötig in die Höhe zu treiben.

Weitere Blechelemente, welche in der Darstellung der Figur 3 mit 33 bezeichnet sind, befinden sich außerdem in axialer Richtung gesehen innerhalb, und zwar so, dass diese zwischen den ersten Blechelementen 32 und den Kühlrohren 22 zu liegen kommen. Es bilden sich dadurch mehrere einzelne Kanalabschnitte aus. Ein großer zentraler Kanalabschnitt 34, welcher die beiden Kühlrohre 22 sowie den Bereich der Wartungsöffnung 24 umfasst. Außerdem befinden sich in axialer Richtung seitlich daneben zwei äußere Kanalabschnitte 35, welche über radiale Öffnungen 62 mit dem Innenraum unter der Hüllwand 5 verbunden sind. Austretender Ölnebel und abströmende Luft können so über die beiden äußeren Kanalabschnitte 35 aufgefangen und unabhängig von der Kühlung der Hüllwand 5 abgeleitet werden.

Ergänzend dazu können auch hier die in Figur 1 gezeigten und angesprochenen axialen Öffnungen 61 vorhanden sein. Diese sind in der Darstellung der Figur jedoch nicht sonderlich gut zu erkennen, sodass auf eine Bezifferung hier verzichtet worden ist.

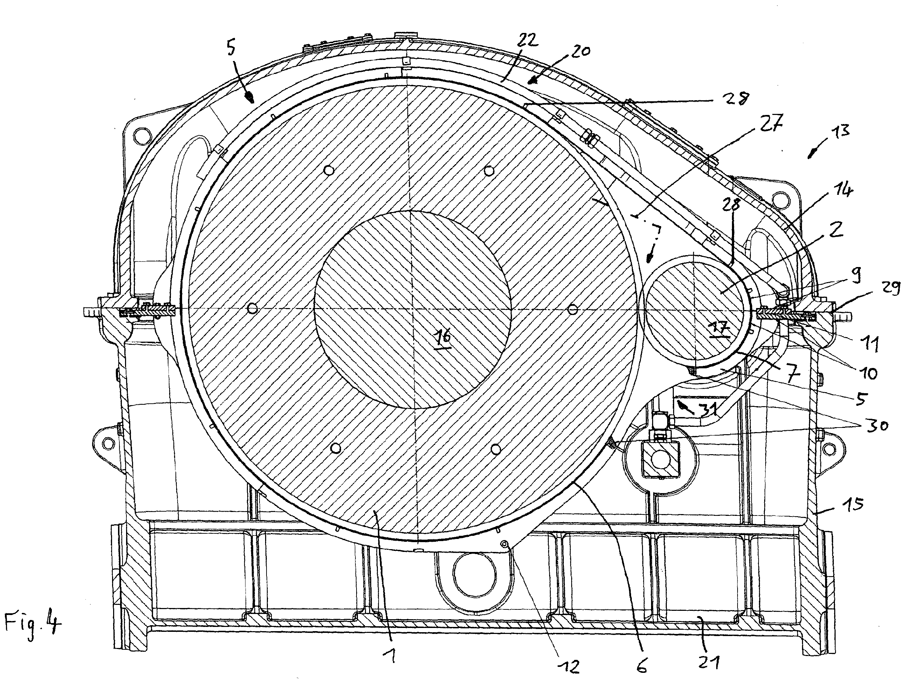

In der Figur 4 sind ferner Dichtungselemente 30 dargestellt, welche die Ringspalte 6, 7 an den Umfangsenden der Hüllwand 5 abdichten. Diese Dichtungselemente 30 sind vorteilhaft aus einem weicheren Werkstoff als die Hüllwand 5 hergestellt, beispielsweise aus Aluminium oder einer Aluminiumlegierung. Die Dichtungselemente 30 sind dabei idealerweise in Radialrichtung einstellbar, sodass die Spaltbreite der Ringspalte 6, 7 sich durch eine Einstellung der Dichtungselemente 30 in der gewünschten Art und Weise exakt einstellen lässt.

Zwischen den beiden Dichtungselementen 30 wird eine Öffnung 31 der Hüllwand 5 freigegeben, durch welche Schmieröl aus der Hüllwand 5 austreten kann.

### Bezugszeichenliste

- 1: Stirnrad
- 2: Stirnrad
- 3: Drehachse
- 4: Drehachse
- 5: Hüllwand
- 6: Ringspalt
- 7: Ringspalt
- 8: Seitenwand
- 9: Oberteil
- 10: Unterteil
- 11: Teilfuge
- 12: Lagerstelle
- 13: Getriebegehäuse
- 14: obere Gehäusehälfte
- 15: untere Gehäusehälfte
- 16: Welle
- 17: Welle
- 18: Lager
- 19: Abschirmplatte
- 19.1: Abschirmplattenoberteil
- 19.2: Abschirmplattenunterteil
- 20: Kühleinrichtung
- 21: Ölsumpf
- 22: Kühlrohr
- 23: Auslassöffnung
- 24: Wartungsöffnung
- 25: Wartungsöffnungsseitenwand
- 26: Steg
- 27: Schmierölversorgung
- 28: Temperaturmessstelle
- 29: Teilfuge
- 30: Dichtungselement
- 31: Öffnung
- 32: Blechelemente
- 33: Weitere Blechelemente
- 34: Zentraler Kanalabschnitt
- 35: Äußere Kanalabschnitte
- 61: Axiale Öffnungen
- 62: Radiale Öffnungen

## Patentansprüche

1. Stirnradgetriebe mit wenigstens zwei verzahnten Stirnrädern (1, 2), deren Verzahnungen in einem kämmenden Eingriff miteinander stehen und die jeweils über einer Drehachse (3, 4) drehbar sind;
1.1 mit einer Hüllwand (5), welche die beiden Stirnräder (1, 2) in Umfangsrichtung und in Richtung der Drehachsen (3, 4) umschließt; wobei
1.2 die Hüllwand (5) eine Innenkontur aufweist, welche den Außendurchmessern der Stirnräder (1, 2) derart angepasst ist, dass sich zwischen der Hüllwand (5) und den Stirnrädern (1, 2) zwei ineinander übergehende Ringspalte (6, 7) ergeben, wobei je ein Ringspalt (6, 7) konzentrisch zu je einer Drehachse (3, 4) angeordnet ist;
1.3 die Hüllwand (5) durch ein entlang einer Teilfuge (11) geschlossenes zweiteiliges Gehäuse mit einem Oberteil (9) und einem Unterteil (10) gebildet wird, wobei sich die Teilfuge (11) teilweise oder vollständig innerhalb einer Ebene erstreckt, in welcher eine der beiden Drehachsen (3, 4) verläuft oder die beiden Drehachsen (3, 4) verlaufen;
1.4 das Unterteil (10) eine einen Abschnitt des Umfangs wenigstens eines oder beider der beiden Stirnräder (1, 2) freigebende Öffnung (31) aufweist, welche ausgehend von den Drehachsen (3, 4) nach unten gerichtet ist;
1.5 in der Hüllwand (5) eine Schmierölversorgung (27) mündet, mittels welcher ein Schmierölstrom in die Verzahnungen der Stirnräder (1, 2) einleitbar oder einspritzbar ist;
1.6 das Oberteil (9) und/oder das Unterteil (10) zwei einander in Axialrichtung der Drehachsen (3, 4) gegenüberstehende Seitenwände (8) aufweist, die zumindest einen Teil der Stirnräder (1, 2) in der Axialrichtung zwischen sich einschließen,
**dadurch gekennzeichnet, dass**
1.7 zumindest das Oberteil (9) der Hüllwand (5) oder das Oberteil (9) und das Unterteil (10) der Hüllwand (5) als Schweißkonstruktion ausgeführt ist/sind;
1.8 zumindest das Oberteil (9) der Hüllwand (5) im Bereich der Ringspalte (6, 7) axiale Öffnungen (61) aufweist.

2. Stirnradgetriebe gemäß Anspruch 1, **dadurch gekennzeichnet, dass** das Oberteil (9) und das Unterteil (10) entlang der Teilfuge (11) lösbar aneinander gefügt, insbesondere verschraubt sind.

3. Stirnradgetriebe gemäß einem der Ansprüche 1 oder 2, **dadurch gekennzeichnet, dass** zumindest das Oberteil (9) oder das Oberteil (9) und das Unterteil (10) aus geschweißtem Stahlblech hergestellt sind.

4. Stirnradgetriebe gemäß einem der Ansprüche 1 bis 3, **dadurch gekennzeichnet, dass** das Oberteil (9) wenigstens eine Hälfte des gemeinsamen äußeren Umfangs der beiden Stirnräder (1, 2) einteillig umschließt.

5. Stirnradgetriebe gemäß einem der Ansprüche 1 bis 4, **dadurch gekennzeichnet, dass** das Stirnradgetriebe ein Getriebegehäuse (13) aufweist, dass einen insbesondere mit einem Luft-Schmiermittel-Gemisch befüllten Innenraum aufweist, und die Stirnräder (1, 2) zusammen mit der Hüllwand (5) in dem Innenraum positioniert sind, wobei die Stirnräder (1, 2) insbesondere oberhalb eines Ölsumpfes (21) und mit Abstand zu diesem im Innenraum angeordnet sind.

6. Stirnradgetriebe gemäß Anspruch 5, **dadurch gekennzeichnet, dass** das Getriebegehäuse (13) aus Stahl oder einer Stahllegierung hergestellt ist.

7. Stirnradgetriebe gemäß einem der Ansprüche 1 bis 6, **dadurch gekennzeichnet, dass** an der Hüllwand (5) wenigstens ein Dichtungselement (30) angeschlossen ist, welches wenigstens einen Ringspalt (6, 7) zumindest teilweise abdichtet, und das wenigstens eine Dichtungselement (30) aus einem weicheren Werkstoff als das Oberteil (9) oder als das Oberteil (9) und das Unterteil (10) hergestellt ist.

8. Stirnradgetriebe gemäß der Ansprüche 1 bis 7, **dadurch gekennzeichnet, dass** die Öffnung (31) in Umfangsrichtung der Stirnräder (1, 2) beidseitig mittels jeweils eines Dichtungselementes (30) gegenüber dem wenigstens einen Stirnrad (1, 2) oder beiden Stirnrädern (1, 2) abgedichtet ist.

9. Stirnradgetriebe gemäß einem der Ansprüche 7 bis 8, **dadurch gekennzeichnet, dass** das wenigstens eine Dichtungselement (30) aus Aluminium hergestellt ist.

10. Stirnradgetriebe gemäß einem der Ansprüche 7 bis 9, **dadurch gekennzeichnet, dass** wenigstens eine Dichtungselement (30) in Radialrichtung einstellbar ausgebildet ist

11. Stirnradgetriebe gemäß einem der Ansprüche 1 bis 10, **dadurch gekennzeichnet, dass** an der Hüllwand (5) eine oder mehrere Temperaturmessstellen (28) vorgesehen sind.

12. Stirnradgetriebe gemäß einem der Ansprüche 1 bis 11, **dadurch gekennzeichnet, dass** die Hüllwand (5) flüssigkeitsgekühlt, insbesondere ölgekühlt ist.

13. Stirnradgetriebe gemäß der Ansprüche 11 und 12, **dadurch gekennzeichnet, dass** zur Flüssigkeitskühlung der Hüllwand (5) ein Kühlmittelstrom über die Hüllwand (5) und/oder durch die Hüllwand (5) leitbar ist und der Kühlmittelstrom getrennt vom Schmierölstrom einstellbar ist, insbesondere in seinem Volumenstrom regelbar oder steuerbar ist.

14. Stirnradgetriebe gemäß Anspruch 5 oder nach einem der Ansprüche 6 bis 13, sofern diese auf Anspruch 5 Bezug nehmen, **dadurch gekennzeichnet, dass** zumindest zwischen dem äußeren Umfang der Hüllwand (5) und einer oberen Gehäusehälfte (14) des Getriebegehäuses (13) mehrere sich in radialer Richtung auf das Getriebegehäuse (13) hin erstreckende Blechelemente (32, 33) angebracht sind, welche wenigstens drei axial benachbarte Kanalabschnitte (34, 35) ausbilden.

15. Stirnradgetriebe gemäß Anspruch 14, **dadurch gekennzeichnet, dass** die Hüllwand (5) im Bereich der äußeren Kanalabschnitte (35) radiale Öffnungen (62) aufweist.

## Claims

1. Spur gear transmission having at least two toothed spur gears (1, 2) whose toothings are in meshing engagement with one another and which can each be rotated about an axis of rotation (3, 4);
1.1 having an enveloping wall (5) which encloses the two spur gears (1, 2) in the circumferential direction and in the direction of the axes of rotation (3, 4); wherein
1.2 the enveloping wall (5) has an inner contour which is adapted to the outside diameters of the spur gears (1, 2) in such a way that two annular gaps (6, 7) which transition into one another result between the enveloping wall (5) and the spur gears (1, 2), wherein a respective annular gap (6, 7) is arranged concentrically to a respective axis of rotation (3, 4);
1.3 the enveloping wall (5) is formed by a two-part housing, which is closed along a parting joint (11), having an upper part (9) and a lower part (10), wherein the parting joint (11) extends partially or completely within a plane in which one of the two axes of rotation (3, 4) runs or in which the two axes of rotation (3, 4) run;
1.4 the lower part (10) has an opening (31) which frees a portion of the circumference of at least one or both of the two spur gears (1, 2) and which is directed downwardly starting from the axes of rotation (3, 4);
1.5 a lubricating oil supply (27) by means of which a lubricating oil flow can be channelled or injected into the toothings of the spur gears (1, 2) opens in the enveloping wall (5);
1.6 the upper part (9) and/or the lower part (10) have/has two side walls (8) which are situated opposite to one another in the axial direction of the axes of rotation (3, 4) and which enclose between them at least part of the spur gears (1, 2) in the axial direction,
**characterized in that**
1.7 at least the upper part (9) of the enveloping wall (5) or the upper part (9) and the lower wall (10) of the enveloping wall (5) is/are configured as a welded construction;
1.8 at least the upper part (9) of the enveloping wall (5) has axial openings (61) in the region of the annular gaps (6, 7).

2. Spur gear transmission according to Claim 1, **characterized in that** the upper part (9) and the lower part (10) are releasably joined to one another, in particular screwed, along the parting joint (11).

3. Spur gear transmission according to either of Claims 1 and 2, **characterized in that** at least the upper part (9) or the upper part (9) and the lower part (10) is/are produced from welded steel sheet.

4. Spur gear transmission according to one of Claims 1 to 3, **characterized in that** the upper part (9) encloses at least a half of the common outer circumference of the two spur gears (1, 2) in one piece.

5. Spur gear transmission according to one of Claims 1 to 4, **characterized in that** the spur gear transmission has a transmission housing (13) which has an interior which is filled in particular with an air-lubricant mixture, and the spur gears (1, 2) are positioned together with the enveloping wall (5) in the interior, wherein the spur gears (1, 2) are arranged in particular above an oil sump (21) and at a distance therefrom in the interior.

6. Spur gear transmission according to Claim 5, **characterized in that** the transmission housing (13) is produced from steel or a steel alloy.

7. Spur gear transmission according to one of Claims 1 to 6, **characterized in that** at least one sealing element (30) which at least partially seals at least one annular gap (6, 7) is connected to the enveloping wall (5), and the at least one sealing element (30) is produced from a softer material than the upper part (9) or than the upper part (9) and the lower part (10).

8. Spur gear transmission according to Claims 1 to 7, **characterized in that** the opening (31) is sealed in the circumferential direction of the spur gears (1, 2) on both sides by means of a respective sealing element (30) with respect to the at least one spur gear (1, 2) or both spur gears (1, 2).

9. Spur gear transmission according to either of Claims 7 and 8, **characterized in that** the at least one sealing element (30) is produced from aluminium.

10. Spur gear transmission according to one of Claims 7 to 9, **characterized in that** at least one sealing element (30) is designed to be adjustable in the radial direction.

11. Spur gear transmission according to one of Claims 1 to 10, **characterized in that** one or more temperature measuring points (28) are provided on the enveloping wall (5) .

12. Spur gear transmission according to one of Claims 1 to 11, **characterized in that** the enveloping wall (5) is liquid-cooled, in particular oil-cooled.

13. Spur gear transmission according to Claims 11 and 12, **characterized in that**, for liquid cooling of the enveloping wall (5), a coolant flow can be channelled over the enveloping wall (5) and/or through the enveloping wall (5), and the coolant flow can be adjusted separately from the lubricant flow, in particular can be regulated or controlled in its volumetric flow.

14. Spur gear transmission according to Claim 5 or according to one of Claims 6 to 13 where the latter refer to Claim 5, **characterized in that**, at least between the outer circumference of the enveloping wall (5) and an upper housing half (14) of the transmission housing (13), there are mounted a plurality of sheet metal elements (32, 33) which extend in the radial direction towards the transmission housing (13) and which form at least three axially adjacent duct portions (34, 35).

15. Spur gear transmission according to Claim 14, **characterized in that** the enveloping wall (5) has radial openings (62) in the region of the outer duct portions (35) .

## Revendications

1. Engrenage à roues cylindriques, comprenant au moins deux roues cylindriques endentées (1, 2) dont les dentures sont engrenées l'une dans l'autre et qui peuvent être mises en rotation respectivement par l'intermédiaire d'un axe de rotation (3, 4) ;
1.1 comprenant une paroi enveloppante (5) qui entoure les deux roues cylindriques (1, 2) dans la direction circonférentielle et dans la direction des axes de rotation (3, 4) ; dans lequel
1.2 la paroi enveloppante (5) présente un contour intérieur qui est adapté aux diamètres extérieurs des roues cylindriques (1, 2) de telle sorte qu'entre la paroi enveloppante (5) et les roues cylindriques (1, 2) se forment deux espaces annulaires (6, 7) passant l'un à l'autre, respectivement un espace annulaire (6, 7) étant disposé de manière concentrique par rapport à respectivement un axe de rotation (3, 4) ;
1.3 la paroi enveloppante (5) est formée par un boîtier en deux parties, fermé le long d'un joint partiel (11) avec une partie supérieure (9) et une partie inférieure (10), le joint partiel (11) s'étendant partiellement ou complètement à l'intérieur d'un plan dans lequel s'étend l'un des deux axes de rotation (3, 4) ou s'étendent les deux axes de rotation (3, 4) ;
1.4 la partie inférieure (10) présente une ouverture (31) libérant une partie de la circonférence d'au moins une ou deux des deux roues cylindriques (1, 2) et qui est dirigée vers le bas en partant des axes de rotation (3, 4) ;
1.5 dans la paroi enveloppante (5) débouche une alimentation en huile lubrifiante (27) au moyen de laquelle un flux d'huile lubrifiante peut être introduit ou injecté dans les dentures des roues cylindriques (1, 2) ;
1.6 la partie supérieure (9) et/ou la partie inférieure (10) présente(nt) deux parois latérales (8), opposées l'une à l'autre dans la direction axiale des axes de rotation (3, 4), qui enferment entre elles au moins une partie des roues cylindriques (1, 2) dans la direction axiale,
**caractérisé en ce que**
1.7 au moins la partie supérieure (9) de la paroi enveloppante (5) ou la partie supérieure (9) et la partie inférieure (10) de la paroi enveloppante (5) sont réalisées sous forme de construction soudée ;
1.8 au moins la partie supérieure (9) de la paroi enveloppante (5) présente des ouvertures axiales (61) au niveau des espaces annulaires (6, 7).

2. Engrenage à roues cylindriques selon la revendication 1, **caractérisé en ce que** la partie supérieure (9) et la partie inférieure (10) sont jointes de manière amovible, en particulier vissées, le long du joint partiel (11).

3. Engrenage à roues cylindriques selon l'une quelconque des revendications 1 ou 2, **caractérisé en ce qu'**au moins la partie supérieure (9), ou la partie supérieure (9) et la partie inférieure (10), est/sont fabriquée(s) en tôle d'acier soudée.

4. Engrenage à roues cylindriques selon l'une quelconque des revendications 1 à 3, **caractérisé en ce que** la partie supérieure (9) entoure de manière intégrale au moins une moitié de la circonférence extérieure commune des deux roues cylindriques (1, 2).

5. Engrenage à roues cylindriques selon l'une quelconque des revendications 1 à 4, **caractérisé en ce que** l'engrenage à roues cylindriques présente un carter d'engrenage (13) qui présente un espace intérieur, en particulier rempli d'un mélange d'air/lubrifiant, et les roues cylindriques (1, 2) sont positionnées dans l'espace intérieur conjointement avec la paroi enveloppante (5), les roues cylindriques (1, 2) étant disposées dans l'espace intérieur en particulier au-dessus d'un bac à huile (21) et à distance de celui-ci.

6. Engrenage à roues cylindriques selon la revendication 5, **caractérisé en ce que** le carter d'engrenage (13) est fabriqué en acier ou en alliage d'acier.

7. Engrenage à roues cylindriques selon l'une quelconque des revendications 1 à 6, **caractérisé en ce que** sur la paroi enveloppante (5), au moins un élément d'étanchéité (30) est connecté qui rend étanche au moins partiellement un espace annulaire (6, 7), et ledit au moins un élément d'étanchéité (30) est fabriqué en un matériau plus souple que la partie supérieure (9) ou que la partie supérieure (9) et la partie inférieure (10).

8. Engrenage à roues cylindriques selon l'une quelconque des revendications 1 à 7, **caractérisé en ce que** l'ouverture (31) dans la direction circonférentielle des roues cylindriques (1, 2) est rendue étanche des deux côtés au moyen respectivement d'un élément d'étanchéité (30) par rapport à ladite au moins une roue cylindrique (1, 2) ou aux deux roues cylindriques (1, 2).

9. Engrenage à roues cylindriques selon l'une quelconque des revendications 7 et 8, **caractérisé en ce que** ledit au moins un élément d'étanchéité (30) est fabriqué en aluminium.

10. Engrenage à roues cylindriques selon l'une quelconque des revendications 7 à 9, **caractérisé en ce que** ledit au moins un élément d'étanchéité (30) est réalisé de manière réglable dans la direction radiale.

11. Engrenage à roues cylindriques selon l'une quelconque des revendications 1 à 10, **caractérisé en ce que** sur la paroi enveloppante (5), un ou plusieurs points de mesure de température (28) sont prévus.

12. Engrenage à roues cylindriques selon l'une quelconque des revendications 1 à 11, **caractérisé en ce que** la paroi enveloppante (5) est refroidie par liquide, en particulier refroidie à l'huile.

13. Engrenage à roues cylindriques selon l'une quelconque des revendications 11 et 12, **caractérisé en ce que** pour le refroidissement par liquide de la paroi enveloppante (5), un flux d'agent réfrigérant peut être conduit sur la paroi enveloppante (5) et/ou à travers la paroi enveloppante (5), et le flux d'agent réfrigérant est réglable séparément du flux d'huile lubrifiante, en particulier **en ce qu'**il peut être régulé ou commandé au niveau de son débit volumique.

14. Engrenage à roues cylindriques selon la revendication 5 ou selon l'une des revendications 6 à 13 dans la mesure où elles se réfèrent à la revendication 5, **caractérisé en ce qu'**au moins entre la circonférence extérieure de la paroi enveloppante (5) et une moitié de carter supérieure (14) du carter d'engrenage (13) sont fixés plusieurs éléments de tôle (32, 33) s'étendant dans la direction radiale vers le carter d'engrenage (13) qui réalisent au moins trois parties de conduit (34, 35) axialement voisines.

15. Engrenage à roues cylindriques selon la revendication 14, **caractérisé en ce que** la paroi enveloppante (5) présente des ouvertures radiales (62) dans la zone des parties de conduit extérieures (35).
